# NEW EUROPEAN PATENT SPECIFICATION

(11) **EP 2 794 368 B2**
(45) Date of publication and mention of the opposition decision: **17.11.2021**
(45) Mention of the grant of the patent: 04.11.2015
(21) Application number: 11817487.9
(22) Date of filing: 23.12.2011
(51) Int. Cl.: B60T 7/04, B60T 13/68, B60T 17/22

(54) **ELECTRONICALLY CONTROLLED PNEUMATIC BRAKE SYSTEM FOR AN AUTOMOTIVE VEHICLE AND AUTOMOTIVE VEHICLE EQUIPPED WITH SUCH A SYSTEM**
ELEKTRONISCH GESTEUERTES PNEUMATISCHES BREMSSYSTEM FÜR EIN AUTOMOBIL UND AUTOMOBIL MIT EINEM SOLCHEN SYSTEM
SYSTÈME DE FREIN PNEUMATIQUE À COMMANDE ÉLECTRONIQUE POUR UN VÉHICULE AUTOMOBILE ET VÉHICULE AUTOMOBILE ÉQUIPÉ D'UN TEL SYSTÈME

(43) Date of publication of application: 29.10.2014
(73) Proprietor: Renault Trucks, 69800 Saint Priest (FR)
(72) Inventor: FARRES, Lionel, F-69800 Saint Priest (FR)
(74) Representative: Lavoix
(86) International application number: PCT/IB2011/003283
(87) International publication number: WO 2013/093545

(56) References cited:
- EP-A1- 1 122 142
- EP-A2- 2 090 481
- EP-A2- 2 090 481
- EP-A2- 2 108 557
- EP-A2- 2 371 641
- EP-B1- 1 406 805
- WO-A1-00/07863
- WO-A1-2004/022401
- WO-A2-2010/010319
- WO-A2-2010/094481
- DE-A1-102007 004 759
- DE-B3-102005 062 907
- DE-B3-102008 009 043
- DE-C1- 10 042 215
- ROBERT BOSCH: "Fahrsicherheitssysteme" In: Karl-Heinz Dietsche et al: "Bosch Kraftfahrtechnisches Taschenbuch. 26 Auflage", 2007
- ROBERT BOSCH GMBH;: Druckluftanlagen für Nutzfahrzeuge 1, Grundlagen, Systeme und Pläne, February 1998 (1998-02), pages 46-57, ISBN: 1 987 722 015
- "EBS Electronically controlled Brake system in motor coaches", WABCO VEHICLE CONTROL SYSTEMS, 2003, pages 1-32,

## Description

### TECHNICAL FIELD OF THE INVENTION

This invention relates to an electronically controlled pneumatic brake system for an automotive vehicle. This invention also relates to an automotive vehicle equipped with such a system.

### BACKGROUND OF THE INVENTION

In the field of automotive vehicles, in particular trucks, it is known to use an air production module, such as disclosed in EP-B-1 406 805, in order to provide air under pressure to pneumatic service brake actuators distributed next to brake mechanisms acting on disks or drums fast in rotation with the wheels of a vehicle. As considered in WO-A-00/07863, a set of solenoid valves can be used to feed some pneumatic circuits with air under pressure. WO2010/010319A2 describes a conventional tractor-trailer electropneumatic brake system, without backup valve air feeding system.

In conventional braking installations, a brake pedal can be equipped with a back-up proportional pneumatic valve which is mechanically controlled by the pedal which controls supply of control air under pressure to some brake modules, in case of failure of an electric control chain. Such a proportional pneumatic valve is costly, requires maintenance and is a source of potential failure. Such pneumatic proportional valve increases the volume of the pedal assembly which can be problematic in already crowded environments. Also, the pneumatic valve needs to be connected to the rest of the pneumatic circuit. On cab-over-engine trucks where the cabin can be tilted with respect to the vehicle chassis, the necessity to pass pneumatic conduits from the chassis to the cabin is also a challenge.

It is also known from EP-A-2 090 481 to use a trailer control module to feed air to a front brake actuator in some circumstances. Such an approach can only be implemented on a vehicle provided with a trailer control module, which is not the case in all trucks. Moreover, this approach does not allow controlling the service brake actuators on the rear axle of a vehicle in case of an electric breakage of some electronic control means. This is all the more important that, when a truck is fully loaded, the braking action on its rear axle must be particularly efficient.

### SUMMARY

The aim of the invention is to provide a new electronically controlled pneumatic brake system which does not need a proportional pneumatic valve to be mounted next to a brake pedal and still allows to efficiently brake a vehicle in case an electric signal provided by the pedal cannot be efficiently processed by an electronic control unit.

To this end, the invention concerns an electronically controlled pneumatic brake system for an automotive vehicle, said system comprising:
- a service brake purely electric input device delivering a first electric signal;
- a main electronic control unit adapted to process the first electric signal;
- at least one pneumatic service brake actuator driving a respective brake mechanism and being fed with air under pressure to fulfill a service brake function;
- at least one electronic brake module adapted to provide air under pressure to said pneumatic service brake actuator, said electronic brake module being controlled electronically by said main electronic control unit and pneumatically, via a pneumatic control line, with air under pressure;
- an air production module selectively providing air under pressure to said electronic brake module;
wherein said brake system includes at least one backup valve system dedicated to feeding said electronic brake module with control air under pressure, via said pneumatic control line.

Thanks to the invention, the backup valve system allows the electronic brake module to be efficient also in case the first electric signal of the service brake pedal is not processed by the electronic control unit. In other words, the backup valve system guarantees that, for example in case the electronic control unit cannot fulfill its control function, braking of the vehicle can still occur thanks to the pneumatic control of the electronic brake module which is obtained independently of the electronic control unit.

According to further aspects of the invention, which are advantageous but not compulsory, such a brake system may incorporate one or several of the following features:
- The brake system may include at least two electronic brake modules providing air under pressure to respective pneumatic service brake actuators on different wheel axles of said vehicle and said backup valve system may feed said at least two electronic brake modules with control air under pressure;
- The electronic brake module may provide air under pressure to pneumatic service brake actuators on a rear wheel axle of said vehicle;
- The backup valve system may be integrated into said air production module;
- The brake system may include a trailer brake control module and said backup valve system may feed said electronic brake module with control air under pressure independently of said trailer brake control module;
- The backup valve system may be controlled according to a signal delivered by said service brake electric input device;
- The backup valve system may be controlled according to a signal delivered by a park brake input device;
- The backup valve system may include a proportional solenoid valve;
- The service brake electric input device may be electrically connected to an electronic unit able to control said backup valve system and distinct from said main electronic control;
- The service brake electric input device may be electrically connected to said distinct electronic control unit for said backup valve system via an electric line independently from said main electronic control unit;
- A park brake input device may be electrically connected to an electronic unit able to control said backup valve system and distinct from said main electronic control;
- The distinct electronic control unit for the backup valve system may be able to control said air production module;
- The backup valve system may include a first proportional solenoid valve and a second solenoid valve located upstream of said proportional solenoid valve and adapted to take a first configuration, where said second solenoid valve connects a source of air under pressure to an inlet of said proportional solenoid valve, and a second configuration where said second solenoid valve connects said inlet of said proportional solenoid valve to the atmosphere;

The invention also concerns an automotive vehicle, in particular a truck, equipped with an electronically controlled pneumatic brake system as mentioned here-above.

### BRIEF DESCRIPTION OF THE DRAWINGS

This invention will now be explained in correspondence with the following figures, as an illustrative example and without restricting its object. In the annexed figures:
- figure 1 is a schematic representation of an electronically controlled pneumatic brake system according to the invention,
- figure 2 is an enlarged view of part II of figure 1,
- figure 3 is an enlarged view of part III of figure 1,
- figure 4 is an enlarged view of detail IV on figure 3 and
- figure 5 is a schematic representation of the backup valve system used in the brake system of figure 1.

### DETAILED DESCRIPTION OF SOME EMBODIMENTS

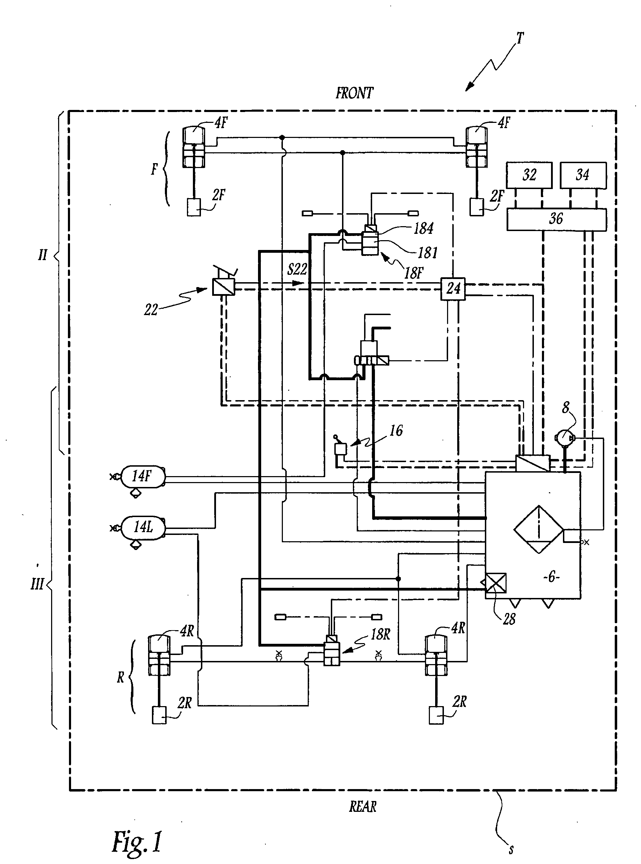

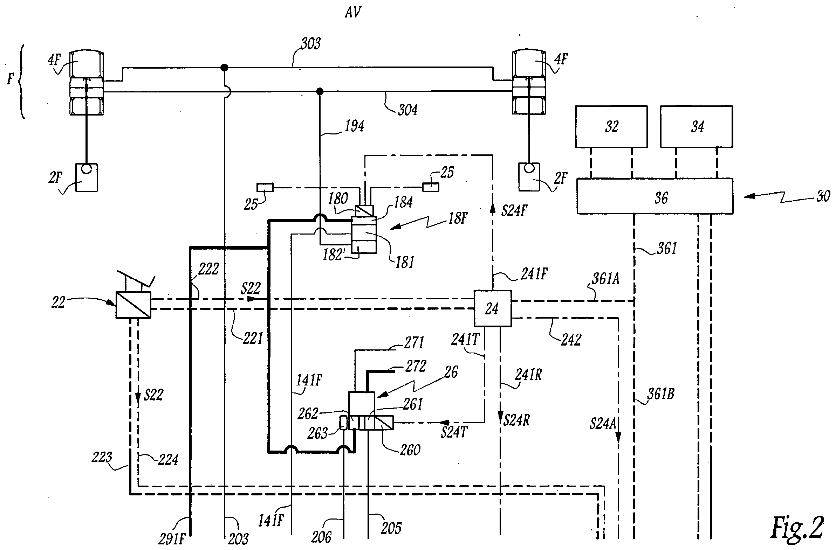

On figures 1 to 5, some parts of a road vehicle such as a truck T or a bus are schematically represented, these parts belonging to an electronically controlled pneumatic friction brake system S which acts on the non-represented wheels of a front axle F and a rear axle R of truck T.

On figures 1 to 5, pneumatic connection lines are represented with solid lines and electric connections are represented with dotted lines. On these figures, pneumatic connection lines for control air are represented with bold solid lines, whereas connecting lines for air as a source of power are represented with thin solid lines. On these figures, bold dotted lines represent supply lines for electrical power, whereas thin dotted lines represent lines conveying electrical signals. It should be noted that an electrical line may comprise one or several wires. Also, an electric signal can be analog or digital. Typically, an electrical line for conveying electrical signals may be a databus.

At the level of front axle F, system S includes two brake mechanisms 2F acting on disks or drums fast in rotation with some wheels of truck T. Each brake mechanism 2F is mechanically driven by a respective pneumatic brake actuator 4F. The brake actuators 4F are fed with air under pressure from an air production module 6, sometimes called "APM". APM 6 is fed with air under pressure by a compressor 8 via a first connecting line 81. APM 6 may include a filter 10 and/or a desiccator 12. APM 6 can be similar to the ones disclosed in EP-B-1 406 805 or WO-A-00/07863. Alternatively, it may have a different structure. APM 6 has the function of regulating the air pressure delivered by the compressor and of securely distributing the air pressure between different consumer circuits connected to respective outlets. Such air production module typically is able to isolate a leaking consumer circuit so that other circuits may remain operative. As described in EP-1.406.805, the APM 6 in the shown embodiment advantageously also comprises electro-pneumatic components for controlling the air pressure to be delivered directly to park brake actuators so that the park brake function is controlled by APM 6.

Rear axle R includes two brake mechanisms 2R and two brake actuators 4R which, in this embodiment, are similar to the ones of the front axle.

System S includes a front tank 14F and a rear tank 14R adapted to store air under pressure coming out of APM 6. A first outlet 61 of APM 6 is connected by a pneumatic connecting line 201 to front tank 14F. A second outlet 62 of APM 6 is connected by a second pneumatic connecting line 202 to rear tank 14R.

Such a brake system constitutes the main service brake system of the vehicle which is used to slow down and to stop the vehicle during normal operation, whatever the speed of the vehicle. Vehicles are in most cases also equipped with a park brake system which is used mainly to maintain the vehicle stopped when it is not in use. Often, the park brake system is at least partly combined with the service brake system, as will be seen in this embodiment. Nevertheless, a park brake system can be independent of the service brake system. It can for example comprise a system for blocking the vehicle transmission. Heavy road vehicles, such as trucks and buses, are also often equipped with a deceleration system, which is only capable of slowing down a vehicle, but often not capable of effectively stopping the vehicle completely within a reasonable distance. Such deceleration systems, such as hydro-dynamic brakes or electro-dynamic brakes, are mostly efficient when the vehicle is riding above a certain speed.

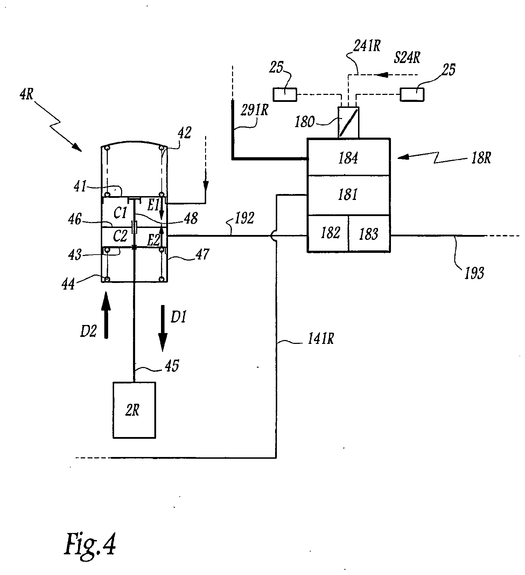

In the shown embodiment, all four brakes actuators are combined service brake and park brake actuators. As shown on figure 4 for the rear left side of truck T, rear left brake actuator 4R includes a first piston 41 loaded by a first spring 42 which exerts a first effort E1 in a first direction D1. Brake actuator 4R also includes a second piston 43 loaded by a second spring 44 which exerts a second effort E2 in a direction D2 opposite to direction D1. Piston 43 is fast with an output rod 45 of brake actuator 4R which drives the associated brake mechanism 2R. A fixed wall 46 is mounted within a housing 47 of brake actuator 4R. Wall 46 defines, respectively with pistons 41 and 43, two chambers C1, C2 of a variable volume. A rod 48, which may be fixed on piston 43, crosses wall 46 in an air tight manner and is adapted to bear against piston 41. Springs 42 and 44 are chosen so that effort E1 is larger than effort E2. Thus, in absence of air pressure within chambers C1 and C2, effort E1 pushes piston 41 in direction D1. This effort is transmitted by rod 48 and piston 43 to rod 45 which actuates the associated mechanism 2R in a first direction. Under such circumstances, brake mechanism 2R engages the brake disk(s) or drum(s) of the associated rear left wheel or wheels. This corresponds to a park brake actuation for truck T. In other words, when no air under pressure is provided to brake actuator 4R, the park brake of truck T is actuated.

When air under pressure is provided to chamber C1, the air pressure within this chamber pushes piston 41 against the action of spring 42 and spring 44 pushes piston 43 in direction D2. This corresponds to the release of the park brake of truck T by air pressure.

When the park brake has been released and if air under pressure is provided to chamber C2, the air pressure within chamber C2 pushes piston 43 in direction D1 which progressively actuates brake mechanism 2R in order to brake the corresponding wheel or wheels. The mechanical effort delivered by the actuator to the brake mechanism increases with the air pressure delivered to chamber C2. This corresponds to the actuation of the service brake of truck T. The service brake actuator is the device which transforms the air pressure into a mechanical force.

As stated above, in this embodiment, all brake actuators 4F and 4R work in the same way as the one represented on figure 4. In other words, providing air under pressure to chamber C1 enables to release the park brake and providing air under pressure to chamber C2 enables to brake the wheels with the service brake of truck T. Nevertheless, the invention could be implemented independently of the fact of whether or not any of the service brake actuators are combined with park brake actuators in any way. Any park brake functionality could be provided, for example by a park brake system partly or entirely independent from the service brake system.

System S may include several parts to control the delivery of air under pressure, as a source of power, to chamber C1 and C2 of the respective brake actuators 4F and 4R. A third outlet 63 of APM 6 is connected by a pneumatic connecting line 203 to a connecting line 303 which is connected to the first chamber C1 of the front brake actuator 4F. Thus, when APM 6 delivers air under pressure via outlet 63, the park brake is released on the front wheels.

A fourth outlet 64 of APM 6 is connected by a pneumatic connecting lines 204 which splits into two branches 204A and 204B, to the first chambers C1 of the rear brake actuators 4R. Thus, when APM 6 delivers air under pressure via outlet 64, the park brake is released on the rear wheels.

Control of APM 6 in order to selectively deliver air under pressure via outlets 63 and 64 is obtained via a park brake input device 16 which can be a purely electric control device electrically connected to an electronic control unit or ECU 60 able to control the park brake system. In this embodiment, the ECU 60 is integrated to APM 6. Advantageously, ECU 60 can also be able to control APM 6. A first electric line 161 supplies device 16 with electric power from ECU 60 and a second electric line 162 conveys an output signal S16 of device 16 to electronic control unit 60. Device 16 may include a lever 163 which can be actuated by hand by the driver. Alternatively, lever 163 can be actuated by foot, or could be any known form of input device with which a driver can interact for controlling the park brake system, including buttons, switches, sliders, touch screens, etc....

Delivery of air under pressure to the second chambers C2 of the brake actuators 4F and 4R, that is actuation of the service brake, is controlled by two electronic brake modules, often called "EBS" modules. In this embodiment, a first electronic brake module, or EBS module 18F, is dedicated to the front axle F and a second electronic brake module, or EBS module 18R, is dedicated to the rear axle R. But other configurations could be possible, for example where an EBS module would deliver air pressure to a front left wheel and to a rear right wheel while a second EBS module would deliver air pressure to a front right wheel and to a rear left wheel.

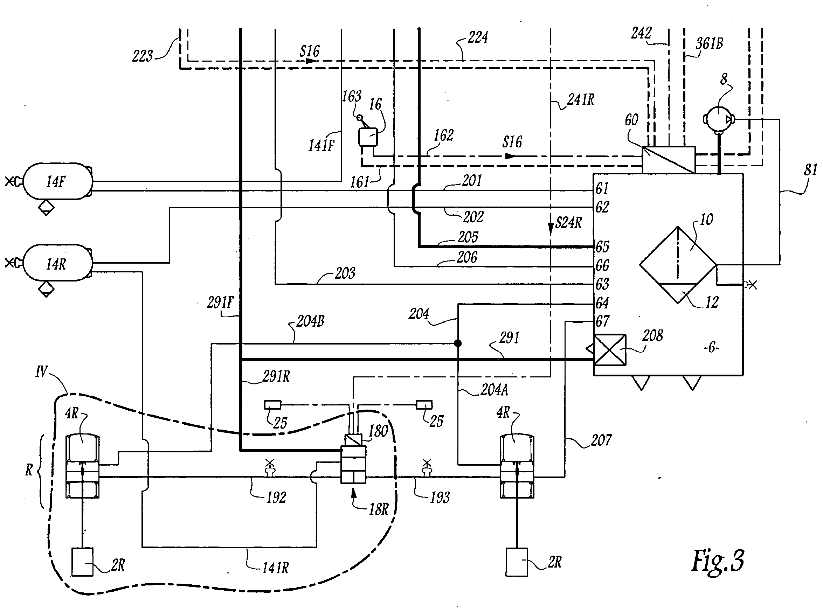

As shown on figures 3 and 4, rear EBS module 18R is fed with air under pressure, as a source of power, from rear tank 14R via a pneumatic connecting line 141 R. EBS module 18R is an electro-pneumatic system which typically includes several solenoid valves piloted by an electronic unit or ECU 180 which belongs to EBS module 18R. The EBS module 18 comprises a pressurized air entry stage 181. A set of valves 182, 183, typically including solenoid valves and pneumatically controlled valves, form an output stage which control delivery of air under pressure received from tank 14R respectively to the left and right service brake actuators 4R, according to the amount of braking force requested by the driver through the service brake input device 22. In this embodiment, EBS module 18R is a double module having an at least partly separate output stage 182, 183 for each of the left and right sides of the axle controlled by the EBS module. Module 18R also includes a pneumatic control port 184 which enables to pilot EBS module 18R with air under pressure in a pure pneumatic mode, for example when ECU 180 has failed. In most cases, the pure pneumatic mode is inhibited as long as the electronic control is possible.

Front EBS module 18F is a so-called single module which includes only one common output stage 182' for delivering a controlled air pressure to both left and right sides of the front axle. Front EBS module 18F also includes a pressurized air entry stage 181 similar to the one of rear EBS module and a pneumatic control port 184 similar to the one of rear EBS module 18R. The front EBS module 18F is controlled by a corresponding ECU 180.

Such EBS modules which are controlled electronically in a nominal mode, but which may be controlled pneumatically, especially in a back-up mode, are well known in the industry and are presently in use on trucks sold by the applicant. For example, such EBS modules are available as spare parts from the company Knorr-Bremse Systeme für Nützfahrzeuge GmbH, from Munich, Germany, which sells such modules under the name "Electro-Pneumatic Modules (EPM) for EBS systems", available under 1-channel or 2-Channel configurations under part numbers K00914, K021203, K000922, K020022, etc...

Front tank 14F is pneumatically connected to pressurized air entry stage 181 of EBS module 18F via a pneumatic connecting line 141 F.

System S includes an electric service brake input device 22 with which the driver is able to interact for controlling the service brake system and which is therefore connected to a main brake electronic control unit 24, often called main ECU. Main ECU 24 communicates with specific ECU 60, and with EBS modules 18F and 18R via their respective ECU 180. Electric brake input device 22 may be connected to main ECU 24 via two electric lines. A first electric line 221 is a power supply line and a second electric line 222 conveys an output signal S22 of electric service brake input device 22 towards main ECU 24 which is designed to process this signal. Service brake input device 22 is a proportional input device, delivering a proportional signal, so that the driver may control the degree of deceleration caused by the service brake system. Typically, the signal varies in proportion of a degree of movement imparted by the driver to a part of the device. Service brake electric input device 22 is preferably a purely electric input device, and it can be in the form of a pedal. It could be in another form of input device, for example in the form of a joystick controller.

Electric brake pedal 22 is preferably also connected to the electronic control unit 60 of APM 6 via two electric lines 223 and 224. Electric line 223 is a power supplying line and electric line 224 conveys the output signal S22 of electric brake pedal 22 to ECU 60.

Under normal working conditions, the driver of truck T releases the park brake by an action on the park brake input device 16. Output signal S16 is treated by electronic control unit 60 which controls APM 6 to deliver air under pressure to the respective chambers C1 of the brake actuators 4F and 4R via the pneumatic control lines 203, 303, 204, 204A and 204B. Then, when the driver uses electric service brake pedal 22, its output signal S22 is provided to main ECU 24 which is connected to the front and rear EBS modules 18F and 18R by two electric lines 241 F, respectively 241 R. Main ECU 24 can thus send control signals S24F and S24R respectively to the electronic control units 180 of EBS modules 18F and 18R via electric lines 241 F and 241 R.

Control signal S24R is used by rear EBS module 18R to control the set of solenoid valves which deliver, via respective output stage 182 and 183 and pneumatic lines 192 and 193, air under pressure to be fed to the second chambers C2 of rear brake actuators 4R.

A difference between front EBS module 18F and rear EBS module 18R is that front EBS module 18F delivers air under pressure, via output stage 182', to the respective second chambers C2 of front brake actuators 4F via a common pneumatic connecting line 194 which is connected to a pneumatic connecting line 304 joining these two chambers. Apart from that, EBS module 18F works in the same way as EBS module 18R.

Two rotation sensors 25 are electrically connected to the ECU 180 of each EBS module 18F and 18R. These sensors detect the actual rotation speed of the wheels controlled by the respective brake mechanisms 2F and 2R, as a part of an ABS sub-system which may be at least in part included in main ECU 24 and/or in the EBS module.

Thus, under normal working conditions, a signal S22 delivered by electric brake pedal 22 is processed by main ECU 24 to control EBS modules 18F and 18R, via their respective ECUs 180, in order to allow air under pressure fed by the respective tanks 14F and 14R to reach the second chambers C2 of the brake actuators 4F and 4R. This allows truck T to brake according to a normal service brake function.

System S may also include a trailer control module 26 which is then preferably controlled by main ECU 24 via a third electronic signal S24T on an electric line 241T. Trailer control module 26 may include an electronic control unit 260 and one or several servo valves. Trailer control module is fed with air under pressure from APM 6. More precisely, two outlets 65 and 66 of APM 6 are connected via pneumatic connecting lines 205 and 206 to trailer control module 26 which delivers respectively control air under pressure and supply air under pressure to a non-represented trailer, respectively via two pneumatic connecting lines 271 and 272. Main ECU 24 is connected to the ECU 60 of APM 6 via en electric line 242 which conveys a control signal S24A from main ECU 24 to specific ECU 60.

A seventh outlet 67 of APM 6 may be connected to the second chamber C2 of at least one of the rear brake actuators 4R, via a pneumatic connecting line 207, in order to fulfill an anti-compound function, that is to avoid that the brake mechanism could be simultaneously subject to the full effort of the park brake spring and to the full effort of the service brake pressure.

A backup valve system 28 is provide, which may be integrated within APM 6, that is mounted on the same support member and controlled by the same specific ECU 60 as the other parts of APM 6. As can be seen from the example shown, it is advantageous to provide that the backup valve system 28 is controlled by an ECU 60 which is distinct from the main braking ECU 24.

In this embodiment, backup valve system 28 is able to control two EBS modules 18F and 18R. Backup valve system 28 therefore is connected, via a pneumatic connecting line 291 splitting into two branches 291 F and 291 R, respectively to the front EBS module 18F and to the rear EBS module 18R. Backup valve system 28 is adapted to provide control air under pressure to the respective pneumatic control ports 184 of EBS modules 18F and 18R.

In case of failure of the electronic control of the service brake system, for example if electronic control unit 180 of rear EBS module 18R is not actuated by signal S24R, the EBS module 18R switches to a purely pneumatic mode where it controls the flow of air coming from rear tank 14R in order to supply the respective second chambers C2 of brake actuators 4R with air under pressure through output stage 182, 183 according to the pneumatic signal which is delivered by back-up valve 28 to the pneumatic control port 184. Thus, in case the electronic part of EBS module 18R is not active, providing control air to valve 184 from backup valve system 28 enables to control this EBS module in an efficient way, in order to obtain a service brake function at the level of service brake actuators 4R and brake mechanisms 2R.

The same applies for front EBS module 18F which also includes a pneumatic control port 184 adapted to control the delivery of air under pressure coming from front tank 14F to lines 194 and 304, thus to the second chambers C2 of front service brake actuators 4F, when front EBS module 18F switches to a purely pneumatic mode, that is for example when its ECU 180 is not active to control the module 18F.

The back-up pneumatic mode could also be implemented in case of failure of the main braking ECU 24, of the brake pedal 22 or of failure of some of the electric lines connecting these elements to the EBS modules.

The backup valve system 28 is electronically controlled and is able to deliver a pressure which is proportional to an action of the driver on the service brake input device 22. This proportional pressure is fed to the EBS modules so that they deliver in turn a proportional pressure to the brake actuators in order to obtain a proportional deceleration of the vehicle. As well known in the art, the proportionality is not necessarily a linear proportionality. Advantageously, this proportionality of the back-up valve system allows giving to the driver the same or similar type of control on the vehicle deceleration as he would obtain with a full electronic control in absence of any failure.

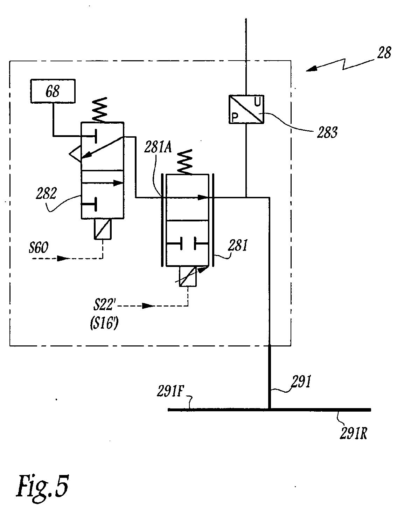

As shown on figure 5, backup valve system 28 may include a first proportional solenoid valve 281 and a second on/off solenoid valve 282 which is connected to a source 68 of air under pressure within APM 6. Proportional solenoid valve 281 is installed downstream of an on/off solenoid valve 282 with respect to source 68.

When it is not actuated, solenoid valve 282 isolates source 68 from solenoid valve 281 and connects an inlet 281A of solenoid valve 281 to the atmosphere. When it is actuated by a signal S60 coming from ECU 60, solenoid valve 282 connects source 68 to solenoid valve 281.

When the system implements the back-up mode to compensate for a failure of the electronic control mode, solenoid valve 281 is piloted via a signal S22' delivered by ECU 60 and representative of signal S22. By selectively opening and closing valve 281, it is possible to obtain a proportionality function. Thus, the output pressure of solenoid valve in connecting line 291 can be variable depending on signal S22'. By default, solenoid valve 281 is open for allowing circulation of air in both directions. Therefore, in the absence of control signal, the backup valve system 28 connects the pneumatic control port 184 of EBS modules 18F, 18R to the atmosphere.

Backup valve system 28 may also include a pressure sensor 283 which can be used by unit 60 in a close loop control algorithm.

As mentioned here-above, in case EBS modules 18F and 18R cannot work in electronic mode, in particular if they are not fed with corresponding control signals by main ECU 24, a service brake function can still be obtained via backup valve system 28 which provides a control air pressure within branches 291 F and 291 R. The pressure in branches 291 F and 291 R depends on the output signal S22 of service brake pedal 22. This control air pressure is used by pneumatic control ports 184 of EBS modules 18F and 18R to control delivery of air under pressure to the respective second chambers C2 of brake actuators 4F and 4R. Since the output of backup valve system 28 is variable according to signal S22' and S60, backup valve system 28 allows to proportionally feed these chambers C2 with air under pressure. Thus, a progressive service brake function can be obtained, even in the backup mode using valve 28.

According to an advantageous embodiment of the invention, it is also possible to control backup valve system 28 on the basis of the output signal S16 of park brake input device 16. In particular, it is possible for the truck driver to use handle 163 to fulfil a service brake function, for example if main ECU 24 and/or brake pedal 22 are not active. Indeed, signal S16 is provided to ECU 60 which can control backup valve system 28 with a signal S16' representative of signal S16, as explained here-above for signal S22'. Also worth noting is that the signal of service brake input device 22 may be transmitted to ECU 60 controlling the backup valve system 28 both directly, through line 224, and indirectly via main braking ECU through lines 222 and 242. Thereby, in case of failure of main braking ECU 24, the driver may obtain a service brake function through service brake input device 22 and through back-up valve system 28.

A key feature of the invention is that no pneumatic proportional valve needs to be connected to service brake pedal 22, which makes the installation of this pedal within the cabin easier and facilitates maintenance operations of truck T.

Moreover, backup valve system 28 is independent from trailer control module 26 and it is adapted to provide a service brake function on the rear axle R of truck T, which is essential in case a truck is fully loaded.

With this respect, backup valve system is dedicated to feeding EBS modules with control air under pressure and does not have to be designed to fulfill other functions. This makes this valve cheaper and more reliable than in a case where it would be used in conjunction with some other parts of system S, like trailer control module 26, to fulfill other functions

Since service brake is based on the use of EBS modules 18F and 18R and backup valve system 28, these items should preferably be correctly and constantly fed with electric power. To this end, an electric power management sub-system 30 may be provided. This sub-system includes two electric batteries 32 and 34 and a power management unit 36 connected respectively to main ECU 24 and to ECU 60 via a power supply line 361 which splits into two branches 361A and 361 B. In case of failure of one of the batteries 32 and 34, unit 36 can still feed ECUs 24 and 60 with electric power. Electric supply lines may also be provided with a redundancy.

The invention is represented on the figures in case backup valve system 28 is integrated into APM 6. Even if this is very convenient in terms of manufacturing, this is optional and backup valve system 28 could be separate from APM 6. Similarly, the ECU controlling the valve backup system could be spate from the APM ECU 60.

The invention is represented in case front EBS module 18F has a single outlet and rear EBS module 18R has a double outlet. Actually, a double outlet EBS module can be used on the front axle F and/or a single outlet EBS module can be used in the rear axle R of a vehicle.

On the figures, the front and rear brake actuators 4F and 4R are identical. In an alternative embodiment, they can be different.

The structure of the backup valve system represented on figure 5 is an example and several other structures can be considered to fulfill the function described here-above.

In the meaning of the invention, « dedicated » means that backup valve system 28 is designed and used only to provide control air under pressure to EBS modules 18F and 18R. In particular, this valve system does not belong to a trailer control module.

A pneumatic brake system according to the invention can incorporate only one or more than two EBS modules. Depending on the numbers of EBS modules, the number of backup valve system(s) 28 can be adapted, but in most cases, a same backup valve system 28 is sufficient for all EBS modules.

## Claims

1. Electronically controlled pneumatic brake system (S) for an automotive vehicle (T), said system comprising:
- a service brake purely electric input device (22) delivering a first electric signal (822);
- a main electronic control unit (24) adapted to process the first electric signal;
- at least one pneumatic service brake actuator (4F, 4R) driving a respective brake mechanism (2F, 2R) and being fed with air under pressure to fulfill a service brake function;
- at least one electronic brake module (18F, 18R) adapted to provide air under pressure to said pneumatic service brake actuator, said electronic brake module being controlled electronically (S24F, S24R) by said main electronic control unit (24) and pneumatically, via a pneumatic control line (291), with air under pressure;
- an air production module (6) selectively providing air under pressure to said electronic brake module;
said brake system (S) being **characterized by** at least one backup valve system (28) dedicated to feeding said electronic brake module (18F, 18R) with control air under pressure, via said pneumatic control line (291).

2. Electronically controlled pneumatic brake system according to claim 1, wherein it includes at least two electronic brake modules (18F, 18R) providing air under pressure to respective pneumatic service brake actuators (4F, 4R) on different wheel axles (F, R) of said vehicle (T) and said backup valve system feeds said electronic brake modules (18F, 18R) with control air under pressure.

3. Electronically controlled pneumatic brake system according to one of claims 1 or 2, wherein said electronic brake module (18R) provides air under pressure to pneumatic service brake actuators (4R) on a rear wheel axle (R) of said vehicle (T).

4. Electronically controlled pneumatic brake system according to any preceding claim, wherein said backup valve system (28) is integrated into said air production module (6).

5. Electronically controlled pneumatic brake system according to any preceding claim, wherein it includes a trailer control module (26) and said backup valve system (28) feeds said electronic brake module (18F, 18R) with control air under pressure independently of said trailer control module.

6. Electronically controlled pneumatic brake system according to any preceding claim, wherein said backup valve system (28) may be controlled according to a signal delivered by said service brake electric input device (22).

7. Electronically controlled pneumatic brake system according to any preceding claim, wherein said backup valve system (28) may be controlled according to a signal delivered by a park brake input device (16).

8. Electronically controlled pneumatic brake system according to any preceding claim, wherein said backup valve system (28) includes a proportional solenoid valve (281).

9. Electronically controlled pneumatic brake system according to any preceding claim, wherein service brake electric input device (22) is electrically connected (162) to an electronic unit (60) able to control said backup valve system (28) and distinct from said main electronic control (24).

10. Electronically controlled pneumatic brake system according claim 9, wherein said service brake electric input device (22) is electrically connected to said distinct electronic control unit (60) for said backup valve system (28) via an electric line (224) independently from said main electronic control unit (24).

11. Electronically controlled pneumatic brake system according to any preceding claim, wherein a park brake input device (16) is electrically connected (162) to an electronic unit (60) able to control said backup valve system (28) and distinct from said main electronic control (24).

12. Electronically controlled pneumatic brake system according to claims 9 to 11, wherein said distinct electronic control unit (60) for the backup valve system (28) is able to control said air production module (6).

13. Electronically controlled pneumatic brake system according to any preceding claim, wherein said backup valve system (28) includes a first proportional solenoid valve (281) and a second solenoid valve (282) located upstream of said proportional solenoid valve (281) and adapted to take a first configuration, where said second solenoid valve connects a source (68) of air under pressure to an inlet (281A) of said proportional solenoid valve (281), and a second configuration where said second solenoid valve (282) connects said inlet of said proportional solenoid valve to the atmosphere.

14. An automotive vehicle, in particular a truck (T), equipped with an electronically controlled pneumatic brake system (S) according to any preceding claims.

## Patentansprüche

1. Elektronisch gesteuertes pneumatisches Bremssystem (S) für ein Kraftfahrzeug (T), wobei das System umfasst:
eine rein elektrische Betriebsbremsen-Eingabevorrichtung (22), die ein erstes elektrisches Signal (S22) liefert,
eine elektronische Hauptsteuereinheit (24), die dazu ausgelegt ist, das erste elektrische Signal zu verarbeiten,
wenigstens ein pneumatisches Betriebsbremsenstellglied (4F, 4R), das einen jeweiligen Bremsmechanismus (2F, 2R) antreibt und mit Druckluft gespeist wird, um eine Betriebsbremsenfunktion zu erfüllen,
wenigstens ein elektronisches Bremsmodul (18F, 18R), das dazu ausgelegt ist, Druckluft zu dem pneumatischen Betriebsbremsenstellglied zu liefern, wobei das elektronische Bremsmodul durch die elektronische Hauptsteuereinheit (24) elektronisch (S24F, S24R) und über eine pneumatische Steuerleitung (291) pneumatisch mit Druckluft gesteuert wird,
ein Lufterzeugungsmodul (6), das Druckluft wahlweise an das elektronische Bremsmodulliefert,
wobei das Bremssystem (S) **gekennzeichnet ist durch**
wenigstens ein Backup-Ventilsystem (28), das für eine Speisung des elektronischen Bremsmoduls (18F, 18R) mit Steuerdruckluft über die pneumatische Steuerleitung (291) bestimmt ist.

2. Elektronisch gesteuertes pneumatisches Bremssystem nach Anspruch 1, wobei es wenigstens zwei elektronische Bremsmodule (18F, 18R) aufweist, die Druckluft an jeweilige pneumatische Betriebsbremsenstellglieder (4F, 4R) an verschiedenen Fahrachsen (F, R) des Fahrzeugs (T) liefern, und das Backup-Ventilsystem die elektronischen Bremsmodule (18F, 18R) mit Steuerdruckluft speist.

3. Elektronisch gesteuertes pneumatisches Bremssystem nach einem der Ansprüche 1 oder 2, wobei das elektronische Bremsmodul (18R) Druckluft an pneumatische Betriebsbremsenstellglieder (4R) an einer Hinterradachse (R) des Fahrzeugs (T) liefert.

4. Elektronisch gesteuertes pneumatisches Bremssystem nach irgendeinem vorhergehenden Anspruch, wobei das Backup-Ventilsystem (28) in das Lufterzeugungsmodul (6) integriert ist.

5. Elektronisch gesteuertes pneumatisches Bremssystem nach irgendeinem vorhergehenden Anspruch, wobei es ein Anhangersteuermodul (26) aufweist, und das Backup-Ventilsystem (28) das elektronische Bremsmodul (18F, 18R) unabhangig von dem Anhangersteuermodul mit Steuerdruckluft speist.

6. Elektronisch gesteuertes pneumatisches Bremssystem nach irgendeinem vorhergehenden Anspruch, wobei das Backup-Ventilsystem (28) einem Signal entsprechend gesteuert werden kann, das von der elektrischen Eingabevorrichtung (22) der Betriebsbremse geliefert wird.

7. Elektronisch gesteuertes pneumatisches Bremssystem nach irgendeinem vorhergehenden Anspruch, wobei das Backup-Ventilsystem (28) einem Signal entsprechend gesteuert werden kann, das durch eine Parkbremseneingabevorrichtung (16) geliefert wird.

8. Elektronisch gesteuertes pneumatisches Bremssystem nach irgendeinem vorhergehenden Anspruch, wobei das Backup-Ventilsystem (28) ein Proportionai-Solenoidventil (281) aufweist.

9. Elektronisch gesteuertes pneumatisches Bremssystem nach irgendeinem vorhergehenden Anspruch, wobei die elektrische Eingabevorrichtung (22) der Betriebsbremse elektrisch mit einer elektronischen Einheit (60) verbunden ist (162), die das Backup-Ventilsystem (28) steuern kann und sich von der elektronischen Hauptsteuerung (24) unterscheidet.

10. Elektronisch gesteuertes pneumatisches Bremssystem nach Anspruch 9, wobei die elektrische Eingabevorrichtung (22) der Betriebsbremse unabhangig von der elektronischen Hauptsteuereinheit (24) elektrisch mit der sich unterscheidenden Steuereinheit (60) für das Backup-Ventilsystem (28) über eine elektrische Leitung (224) verbunden ist.

11. Elektronisch gesteuertes pneumatisches Bremssystem nach irgendeinem vorhergehenden Anspruch, wobei eine Parkbremseneingabevorrichtung (16) elektrisch mit einer elektronischen Einheit (60) verbunden ist (162), die das Backup-Ventilsystem (28) steuern kann und sich von der elektronischen Hauptsteuerung (24) unterscheidet.

12. Elektronisch gesteuertes pneumatisches Bremssystem nach Anspruch 9 bis 11, wobei die sich unterscheidende elektronische Steuereinheit (60) für das Backup-Ventilsystem (28) das Lufterzeugungsmodul (6) steuern kann.

13. Elektronisch gesteuertes pneumatisches Bremssystem nach irgendeinem vorhergehenden Anspruch, wobei das Backup-Ventilsystem (28) ein erstes Proportionai-Solenoidventil (281) und ein zweites Solenoidventil (282) aufweist, das stromaufwärts des Proportionai-Solenoidventils (281) angeordnet ist und dazu ausgelegt ist, eine erste Konfiguration, in der das zweite Solenoidventil eine Druckluftquelle (68) mit einem Einlass (281A) des Proportionai-Solenoidventils (281) verbindet, und eine zweite Konfiguration anzunehmen, in der das zweite Solenoidventil (282) den Einlass des Proportionai-Solenoidventils mit der Atmosphäre verbindet.

14. Kraftfahrzeug, insbesondere ein Lastwagen (T), der mit einem elektronisch gesteuerten pneumatischen Bremssystem (S) nach einem der vorhergehenden Ansprüche ausgestattet ist.

## Revendications

1. Système de frein pneumatique à commande électronique (S) pour un véhicule automobile (T), ledit système comprenant :
- un dispositif d'entrée purement électrique de frein de service (22) émettant un premier signal électrique (S22)
- une unité de commande électronique principale (24) conçue pour traiter le premier signal électrique
- au moins un actionneur de frein de service pneumatique (4F, 4R) entraînant un mécanisme de frein (2F,2R) respectif et étant alimenté en air sous pression pour remplir une fonction de frein de service;
- au moins un module de frein électronique (18F, 18R) conçu pour amener de l'air sous pression audit actionneur de frein de service pneumatique, ledit module de frein électronique étant commandé électroniquement (S24F, S24R) par ladite unité de commande électronique principale (24) et sur le plan pneumatique, via une ligne de commande pneumatique (291), avec de l'air sous pression
- un module de production d'air (6) fournissant de manière sélective de l'air sous pression audit module de frein électronique ledit système de frein (S) étant **caractérisé par** :
au moins un système de soupape de secours (28) conçu pour alimenter ledit module de frein électronique (18F, 18R) avec de l'air de commande sous pression, via ladite ligne de commande pneumatique (291) .

2. Système de frein pneumatique à commande électronique selon la revendication 1, dans lequel il comprend au moins deux modules de frein électronique (18F, 18R) fournissant de l'air sous pression aux actionneurs de frein de service pneumatique (4F, 4R) respectifs sur différents essieux de roue (F, R) dudit véhicule (T) et ledit système de soupape de secours alimentant lesdits modules de frein électronique (18F, 18R) avec de l'air de commande sous pression.

3. Système de frein pneumatique à commande électronique selon l'une quelconque des revendications 1 ou 2, dans lequel ledit module de frein électronique (18R) fournit de l'air sous pression aux actionneurs de frein de service pneumatique (4R) sur un essieu de roue arrière (R) dudit véhicule (T).

4. Système de frein pneumatique à commande électronique selon l'une quelconque des revendications précédentes, dans lequel ledit système de soupape de secours (28) est intégré dans ledit module de production d'air (6).

5. Système de frein pneumatique à commande électronique selon l'une quelconque des revendications précédentes, dans lequel il comprend un module de commande de remorque (26) et ledit système de soupape de secours (28) alimente ledit module de frein électronique (18F, 18R) en air de commande sous pression indépendamment dudit module de commande de remorque.

6. Système de frein pneumatique à commande électronique selon l'une quelconque des revendications précédentes, dans lequel ledit système de soupape de secours (28) peut être commandé en fonction d'un signal émis par ledit dispositif d'entrée électrique de frein de service (22) .

7. Système de frein pneumatique à commande électronique selon l'une quelconque des revendications précédentes, dans lequel ledit système de soupape de secours (28) peut être commandé en fonction d'un signal émis par un dispositif d'entrée de frein de stationnement (16).

8. Système de frein pneumatique à commande électronique selon l'une quelconque des revendications précédentes, dans lequel ledit système de soupape de secours (28) comprend une électrovanne proportionnelle (281) .

9. Système de frein pneumatique à commande électronique selon l'une quelconque des revendications précédentes, dans lequel le dispositif d'entrée électrique de frein de service (22) est connecté électriquement (162) à une unité électronique (60) capable de commander ledit système de soupape de secours (28) et distinct de ladite commande électronique principale (24).

10. Système de frein pneumatique à commande électronique selon la revendication 9, dans lequel ledit dispositif d'entrée électrique de frein de service (22) est connecté électriquement à ladite unité de commande électronique (60) distincte pour ledit système de soupape de secours (28) via une ligne électrique (224) indépendamment de ladite unité de commande électronique principale (24).

11. Système de frein pneumatique à commande électronique selon l'une quelconque des revendications précédentes, dans lequel un dispositif d'entrée de frein de stationnement (16) est connecté électriquement (162) à une unité électronique (60) capable de commander ledit système de soupape de secours (28) et distinct de ladite commande électronique principale (24).

12. Système de frein pneumatique à commande électronique selon les revendications 9 à 11, dans lequel ladite unité de commande électronique (60) distincte pour le système de soupape de secours (28) est capable de commander ledit module de production d'air (6) .

13. Système de frein pneumatique à commande électronique selon l'une quelconque des revendications précédentes, dans lequel ledit système de soupape de secours (28) comprend une première électrovanne proportionnelle (281) et une seconde électrovanne (282) positionnée en amont de ladite électrovanne proportionnelle (281) et conçue pour prendre une première configuration, ladite seconde électrovanne connectant une source (68) d'air sous pression à un orifice d'admission (281A) de ladite électrovanne proportionnelle (281) et une seconde configuration dans laquelle ladite seconde électrovanne (282) connecte ledit orifice d'admission de ladite électrovanne proportionnelle à l'atmosphère.

14. Véhicule automobile, notamment camion (T), équipé d'un système de frein pneumatique à commande électronique (S) selon l'une quelconque des revendications précédentes.
